# EUROPÄISCHE PATENTSCHRIFT

(11) **EP 1 262 098 B1**
(45) Veröffentlichungstag und Bekanntmachung des Hinweises auf die Patenterteilung: **23.03.2005**
(21) Anmeldenummer: 02007659.2
(22) Anmeldetag: 04.04.2002
(51) Int. Cl.: A01D 78/10

(54) **Schwadgerät**
Swathing device
Dispositif d'andainage

(30) Priorität: 31.05.2001 DE 20109124 U
(43) Veröffentlichungstag der Anmeldung: 04.12.2002
(73) Patentinhaber: Kverneland ASA, 4355 Kvernaland (NO)
(72) Erfinder: Fahr, Joachim, 78244 Gottmadingen (DE); Leyhr, Christian, 78315 Radolfzell-Böhringen (DE)
(74) Vertreter: Grünecker, Kinkeldey, Stockmair & Schwanhäusser Anwaltssozietät

(56) Entgegenhaltungen:
- EP-A- 0 290 059
- EP-A- 0 484 794
- EP-A- 0 819 372
- EP-A- 0 937 383
- EP-A- 0 978 228
- EP-A- 1 095 556
- DE-U- 9 114 316
- FR-A- 2 663 189
- GB-A- 1 073 008
- US-A- 4 926 619

## Beschreibung

Die Erfindung betrifft ein Schwadgerät der im Oberbegriff des Anspruchs 1 angegebenen Art.

Es ist seit Jahren ein Schwadgerät im praktischen Einsatz bekannt, das eine Kombination eines Doppelkreiselschwaders mit zwei davor nach außen gesetzten Spinnenradgruppen ist, siehe z.B EP-A-0 290 059. Der Doppelkreiselschwader enthält zwei um fast vertikale Kreiselachsen vom Schlepper aus angetriebene Zinkenkreisel mit ungesteuerten Zinken, die innerhalb der ganzen Umlaufbahn sich aus nach oben eingschwenkten Passivlagen durch die Fliehkraft in ihre Arbeitsstellung nach unten außen verstellen. Der Doppelkreiselschwader ist so schmal, dass bei eingeschwenkten Zinken die maximal zulässige Transportbreite eingehalten wird. Aus diesem Grund sind die Zinkenkreisel fest am Traggestell angebracht. Die außen angeordneten, relativ leichten und einfachen Spinnenradgruppen vergrößern zwar die Arbeitsbreite; müssen jedoch zum Transport bis innerhalb der Transportbreite am Traggestell hochschwenkbar sein. Wegen der geringen Arbeitsbreite der Zinkenkreisel bleiben die Spinnenradgruppen in der Transportstellung gerade noch innerhalb der zulässigen Transporthöhe. Das bekannte Schwadgerät erfüllt jedoch konstruktionsbedingt moderne Anforderungen an große Arbeitsbreiten nicht.

Im Hinblick auf heutzutage geforderten großen Arbeitsbreiten haben sich sogenannte Mittelschwader mit zwei inneren Zinkenkreiseln mit zwangsgesteuerten Zinken durchgesetzt, wobei an das Traggestell weitere Ausleger mit mindestens zwei weiteren, vom Schlepper aus angetriebenen Zinkenkreiseln mit gesteuerten Zinken angebaut sind. Um mit diesen großen Zinkenkreiseln und ihren erforderlichen Antriebssträngen die zulässigen Transportbreiten und Transporthöhen einhalten zu können, sind aufwendige bauliche Maßnahmen erforderlich. Diese Schwadgeräte für große Arbeitsbreiten sind deshalb sehr schere Konstruktionen und relativ teuer.

Es gibt erheblichen Bedarf nach Schwadgeräten für große Arbeitsbreiten, die baulich einfacher, leichter und preiswerter sind als die Schwadgeräte nur mit Zinkenkreiseln mit gesteuerten Zinken. Anstelle zusätzlicher Zinkenkreisel mit gesteuerten Zinken bodenangetriebene und deshalb einfache und leichte Spinnenradgruppen zur Vergrößerung der Arbeitsbreite einzusetzen, wurde aus mehreren Gründen für nicht praktikabel angesehen. Bodenangetriebene Spinnenradgruppen verzopfen das Erntegut, z.B. Heu, so stark, dass es sich nicht häckseln lässt, und die zwangsgesteuerten Zinken der innen arbeitenden Zinkenkreisel in ihrer Funktion beeinträchtigen könnte. Ferner war zu befürchten, dass Spinnenradgruppen bei großen Arbeitsbreiten eine zu geringe Leistung erbringen gegenüber innen arbeitenden Zinkenkreiseln mit gesteuerten Zinken. Schließlich lassen relativ hoch bauende Spinnenradgruppen, wenn sie bei großer Arbeitsbreite außen arbeiten, in ihren Transportstellungen die zulässige Transporthöhe nicht mehr einhalten.

Der Erfindung liegt die Aufgabe zugrunde, ein Schwadgerät der eingangs genannten Art anzugeben, das trotz seiner Eignung für große Arbeitsbreiten baulich einfach, relativ leicht und kostengünstig ist, und sich dennoch für den Transport bequem manipulieren und manövrieren lässt.

Die gestellte Aufgabe wird mit den Merkmalen des Anspruchs 1 gelöst.

Überraschend zeigt sich, dass mit entsprechender Auslegung und Anordnung der Spinnenradgruppen in Kombination mit zwei großen innenliegenden Zinkenkreiseln ein Schwadgerät auch für große Arbeitsbreiten zu schaffen ist, wenn die Zinkenkreisel zwangsgesteuerte Zinken und eine Arbeitsbreite größer 4,0 m, gegebenenfalls sogar größer 5,0 m, haben, und sich zum Einhalten der Transportbreite in Transportstellungen am Traggestell hochschwenken lassen. Trotz der relativ hoch bauenden Spinnenradgruppen lassen sich diese innerhalb der maximal zulässigen Transporthöhe einstellen, wenn sie in ihren Transportstellungen höhenverstellbar sind, und abgesenkt werden können. Den Nachteil der Verzopfung des Ernteguts beheben überraschend die zwangsgesteuerten Zinken der Zinkenkreisel, so dass sich das im Mittelschwad zusammengebrachte Emtegut problemlos auch häckseln lässt. Die relativ leicht bauenden bodengetriebenen Spinnenradgruppen vermindern das Gesamtgewicht des Schwadgeräts, vereinfachen vor allem wegen fehlender Antriebsstränge den strukturellen Aufbau und ergeben ein preiswertes Schwadgerät für große Arbeitsbreiten. Hierbei ist günstig, dass das Integrieren der Spinnenradgruppen keine nennenswerten Modifikationen des bewährten Mittelschwaderbaukonzepts mit nur zwei Zinkenkreiseln erfordert, sondern übliche Komponenten in erheblichem Umfang übernommen werden können. Das verminderte Gewicht und der einfache Aufbau erleichtern trotz der großen Arbeitsbreite von beispielsweise mehr als 12 m das Manipulieren und Manövrieren des Schwadgeräts bei der Arbeit und beim Transport.

Aus der Kombination der bodengetriebenen Spinnenradgruppen mit den innen arbeitenden Zinkenkreiseln mit gesteuerten Zinken ergibt sich eine unerwartete Effizienz des Schwadgeräts. Die zwangsgesteuerten Zinken der Zinkenkreisel sind an Tragarmen angeordnet, die strahlenförmig von einem drehangetriebenen Rotor ausgehen und im Rotor um ihre Längsachsen drehbar sind. Über einen in Arbeitsfahrtrichtung vomeliegenden, relativ großen Umfangsbereich der Umlaufbahn werden die Zinken in Bodenkontakt gehalten und nach unten relativ steil angestellt, so dass sie das Erntegut wirksam zur Mitte fördern, und zwar das von den Spinnenradgruppen einwärts verlagerte Erntegut und das zwischen den Spinnenradgruppen liegende Emtegut. Verzopfungen im Erntegut werden durch die gleichmäßige intensive Förderwirkung der gesteuerten Zinken weitgehend beseitigt. Da die gesteuerten Zinken in etwa ab der Mitte und im in Fahrtrichtung hintenliegenden Teil der Umlaufbahn fast bodenparallel angestellt und aus dem Erntegut herausgezogen werden, wird kein Erntegut von der Mitte wieder nach außen geworfen. Es ergibt sich eine gleichmäßige, wohl orientierte Mittelschwadform.

Längenverstellbare Ausleger für die Zinkenkreisel und die Spinnenradgruppen ergänzen die Kombination zweckmäßig. In Arbeitsfahrt lässt sich beispielsweise die relative Zuordnung zwischen den Spinnenradgruppen und den Zinkenkreiseln bequem mittels der längenverstellbaren Ausleger optimieren. Für Transportfahrt lassen sich sowohl die Zinkenkreisel als auch die Spinnenradgruppen bequem so weit absenken, dass die Transportbreite und die Transporthöhe problemlos eingehalten werden und ein stabiler und günstig zu manövrierender Transportstand entsteht.

Zum geringen Gesamtgewicht und zur Stabilität des Schwadgeräts trägt ein Hauptrahmen mit der Form eines Längsträgers bei, wobei das Transportfahrwerk mit großer Spurweite an geeigneter Position innerhalb der Längserstreckung des Längsträgers platziert werden kann, ohne in Arbeitsfahrt nennenswert zu stören.

Zweckmäßigerweise ist der Längsträger aus mehreren Sektionen zusammengesetzt, die gegebenenfalls mit dem daran angebrachten aktiven Komponenten einzeln vorfertigbar und bequem zusammenbaubar sind.

Das Manipulieren und Manövrieren des Schwadgeräts in Transportfahrt ist mit einem am hinteren Ende des Längsträgers angeordneten Transportfahrwerk mit großer Arbeitsbreite bequem durchzuführen. Außerdem beeinträchtigt das Transportfahrwerk das Arbeiten der aktiven Komponenten bei Arbeitsfahrt nicht.

Alternativ kann das Transportfahrwerk in der Mitte des Längsträgers platziert werden, beispielsweise zwischen den Quertraversen für die Zinkenkreisel und die Spinnenradgruppen.

Da das Schwadgerät in Transportstellung wegen der großen Arbeitsbreite mit seinem Traggestell beträchtliche Dimensionen hat, ist es zweckmäßig, das Transportfahrwerk mit lenkbaren Transporträdem auszustatten.

Eine bevorzugte Lösung eines lenkbaren Transportfahrwerks verwendet eine Zwangslenkung für die Transportlaufräder über ein Lenkgestänge, das die Transportlaufräder zwangsweise korrespondierend mit dem Schwenkwinkel des Längsträgers relativ zum Schlepper lenkt. Die Lenkkraft wird günstig direkt von der beim Schwenken des Längsträgers relativ zum Schlepper aufgebauten Kraft abgeleitet. Gegebenenfalls ist die Zwangslenkung sogar servounterstützt.

Um die Spinnenradgruppen Bodenunebenheiten gut folgen zu lassen, sind die Ausleger zweckmäßigerweise auf Bodentasträdem abgestützt, die in Arbeitsfahrtrichtung vor dem Arbeitsbereich der Spinnenradgruppen laufen.

Für Extremsituationen lässt sich die Zwangslenkung mittels eines Stellglieds übersteuern, um zumindest vorübergehend aktiv lenken zu können. Dies ist bei der durch die große Arbeitsbreite bedingten Länge des Traggestells zweckmäßig bei erschwerten Manövrierbedingungen.

Die Einstellung der Auslegerlänge für Arbeitsfahrt und speziell für Transportfahrt lässt sich bequem mit teleskopierbaren Auslegern bewerkstelligen, die sich mit femverstellbaren Hydraulikzylindern sogar vom Schlepper aus jederzeit in ihrer Länge einstellen lassen.

Aus Gewichtsgründen ist jede Spinnenradgruppe mit ihren Spinnenrädern an einer gemeinsamen Tragkonstruktion angeordnet, die vom Ausleger geführt wird. Die Tragkonstruktion legt die relative Versetzung der Zinkenspinnen zueinander fest. Über die Einstellung des Schwenkwinkels der Tragkonstruktion relativ zum Ausleger lässt sich die Effizienz der Spinnenradgruppen optimieren. Die Schwenkwinkeiverstellvorrichtung kann mechanischer Natur sein und wird bei stehendem Schwadgerät vom Fahrzeugführer wie benötigt eingestellt. Vorzugsweise ist die Verstellvorrichtung fernverstellbar, z.B. vom Schlepper aus, um bei variierenden Arbeitsverhältnissen ohne anzuhalten die erforderlichen Einstellungen vornehmen zu können.

Der Auflagedruck der Spinnenradgruppen wird durch wenigstens ein Gewichtsentlastungs-Federelement wie erforderlich eingestellt, das sich am Ausleger abstützt. Zweckmäßigerweise ist eine Fernverstellung für die Entlastungswirkung des Federelements vorgesehen, z.B. eine hydraulische Einrichtung, um den Auflagedruck ohne anzuhalten vom Schlepper aus optimal einzustellen, beispielsweise bei variierenden Arbeitsverhältnissen wie bei einem sehr feuchten Abschnitt des Ernteguts.

Im Hinblick auf eine stabile Abstützung der Spinnenradgruppen in Arbeitsfahrt und bei großer Arbeitsbreite, und auch um die maximal zulässige Transportbreite einhalten zu können, sollten die Stellachsen der Ausleger der Spinnenradgruppen so weit außen wie möglich liegen, d.h., gerade innerhalb der zulässigen Transportbreite. Hingegen sollten die Stellachsen der Zinkenkreisel weiter innen positioniert sein.

Im Hinblick auf die angestrebte Möglichkeit, von bewährten Mittelschwader-Baukonzepten für die Kombination mit den die Arbeitsbreite vergrößernden Spinnenradgruppen so wenig wie möglich ändern zu müssen, und möglichst viele Komponenten weiter verwenden zu können, sollten die vordere Sektion und die hintere Sektion des Längsträgers des Traggestells entsprechend abgetrennte Sektionen des Längsträgers eines marktüblichen Mittelschwaders sein, wobei zwischen diese beiden Sektionen die Distanzhaltersektion als neuer Bestandteil angefertigt und eingesetzt wird, und die Quertraverse für die Spinnenradgruppen in die vordere Sektion des marktüblichen Mittelschwaders integriert wird. Dies spart Kosten und ermöglicht es, die gleichen Grundkomponenten für Mittelschwader mit zwei Zinkenkreiseln und einer Arbeitsbreite größer 4 m, vorzugsweise größer 5 m, und für Schwadgeräte mit Arbeitsbreiten größer 12 m zu verwenden.

Anhand der Zeichnung wird eine Ausführungsform des Erfindungsgegenstandes erläutert. Es zeigen:
- Fig. 1: eine Draufsicht auf ein Schwadgerät, in der Arbeitsstellung,
- Fig. 2: eine Seitenansicht zu Fig. 1,
- Fig. 3: eine Vorderansicht des Schwadgeräts, in Blickrichtung nach links in Fig. 1,
- Fig. 4: eine detailliertere Variante zu den Fig. 1 bis 3,
- Fig. 5: eine Seitenansicht des Schwadgeräts in Transportstellung,
- Fig. 6: eine Draufsicht zu Fig. 5, und
- Fig. 7: eine Vorderansicht zu Fig. 5 in Blickrichtung von links bzw. von der Seite eines nicht dargestellten Schleppers her.

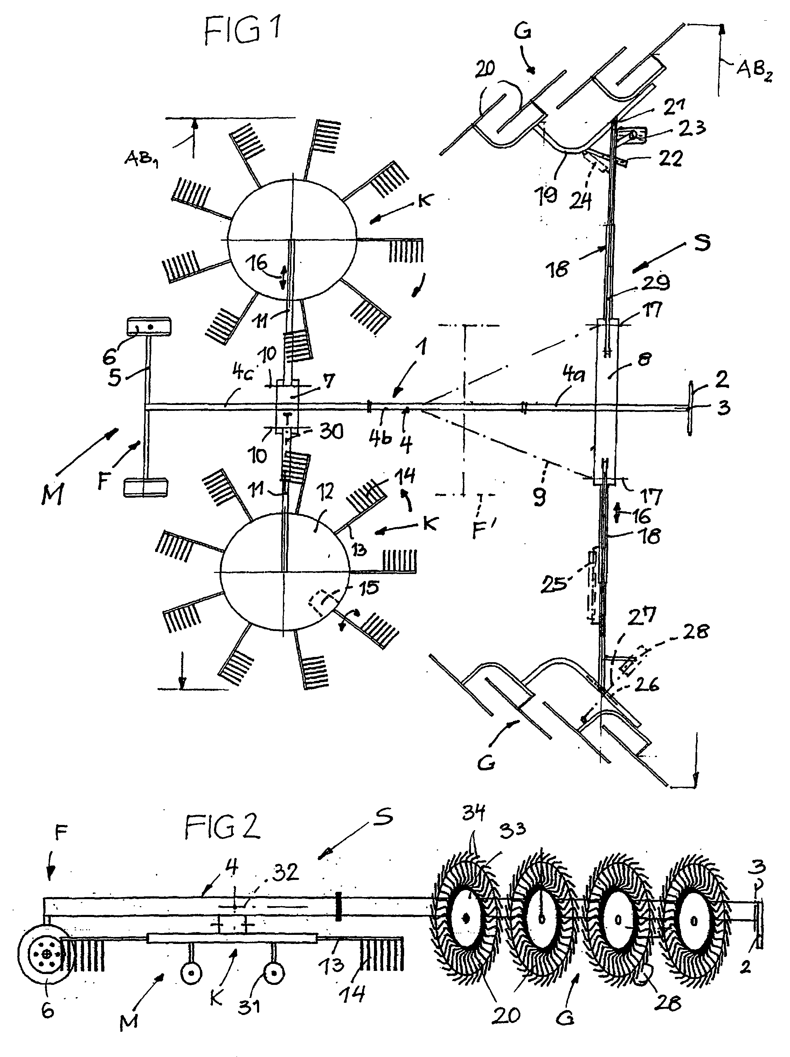

Ein Schwadgerät S in den Fig. 1 bis 3 ist für große Arbeitsbreiten beispielsweise mehr als 12 m konzipiert und eine Kombination aus einem Mittelschwader M mit in Arbeitsfahrtrichtung (Fig. 1 nach rechts) davor und außerhalb angeordneten Spinnenradgruppen G an einem gemeinsamen Traggestell 1.

Das Traggestell 1 enthält als Hauptkomponente einen Längsträger 4, der beispielsweise aus drei Sektionen zusammengesetzt ist, nämlich einer vorderen Sektion 4a, einer mittleren Distanzhaltesektion 4b, und einer hinteren Sektion 4c. Für das Schwadgerät S ist ein Transportfahrwerk F vorgesehen, das zweckmäßigerweise am hinteren Ende des Längsträgers 4 angebracht ist, und eine Portalachse 5 mit Transportlaufrädem 6 beiderseits des Mittelschwadbereichs ausgestattet ist. Alternativ ist in Fig. 1 strichpunktiert ein Transportfahrwerk F' angedeutet, das unterhalb der Distanzhaltesektion 4b angeordnet sein kann. Das in Fig. 1 in ausgezogenen Linien gezeigte Transportfahrwerk F weist lenkbare Transportlaufräder 6 auf, für die eine Zwangslenkung L (Fig. 4) zweckmäßig ist, um die Transporträder 6 bei Transportfahrt in Abhängigkeit vom Schwenkwinkel des Längsträgers 4 relativ zu einem Tragrahmen 2 in einem Gelenk 3 mit etwa vertikaler Gelenkachse zu lenken. Der Tragrahmen 2 wird an der Dreipunkthebevorrichtung des Schleppers angeschlossen.

In die hintere Sektion 4c des Längsträgers 4 ist eine Quertraverse 7 integriert, während in die vordere Sektion 4a eine Quertraverse 8 integriert ist. Die Quertraverse 8 kann über Verstrebungen 9 (strichpunktiert angedeutet) an der Distanzhaltesektion 4b abgestützt sein.

An der Quertraverse 7 sind beiderseits der Längsachse des Längsträgers 4 Stellachsen 10 für Ausleger 11 der beiden Zinkenkreisel K des Mittelschwaders M vorgesehen. An der Quertraverse 8 sind Stellachsen 17 für Ausleger 18 der Spinnenradgruppen G vorgesehen. Die Stellachsen 10, 17 sind annähernd zur Längsachse des Längsträgers 4 parallel. Der Abstand zwischen den Stellachsen 10 ist zweckmäßigerweise deutlich geringer als die maximal zulässige Transportbreite, während der Abstand zwischen den Stellachsen 17 in etwa der maximal zulässigen Transportbreite entspricht (z.B. ca. 2,70 m).

Die Zinkenkreisel K des Mittelschwaders M weisen zwangsgesteuerte Zinken 14 auf. Die Zinkens sind gruppenweise an von Rotoren 12 nach außen ragenden Tragarmen 13 angeordnet. Die Tragarme 13 sind im Rotor 12 um ihre Längsachse hin- und herdrehbar und werden im Betrieb über eine schematisch angedeutete Steuereinrichtung 15 zumindest verdreht. Die Rotoren 12 werden vom Schlepper aus über nicht dargestellte Antriebsstränge und Getriebe in etwa oberhalb der annähernd vertikalen Kreiselachsen drehangetrieben. Die Steuervorrichtungen 15 sorgen dafür, dass die gegensinnig rotierenden Zinkengruppen 14 jeweils über einen erheblichen Teil der Umlaufbahn an der in Arbeitsfahrtrichtung (Fig. 1 nach rechts) vorderen Seite steil angestellt sind und den Boden kontaktieren, während sie im hinteren Teil ihrer Umlaufbahnen nahezu bodenparallel orientiert und aus dem Erntegut angehoben sind. Die Ausleger 11 der beiden Zinkenkreisel K sind längenverstellbar (Doppelpfeil 16), einerseits, um die Arbeitsbreite des Mittelschwaders einstellen zu können (AB₁), andererseits um die Zinkenkreisel K in der Transportstellung (Fig. 5) absenken zu können. Die Arbeitsbreite AB₁ des Mittelschwaders M beträgt mindestens 5 m.

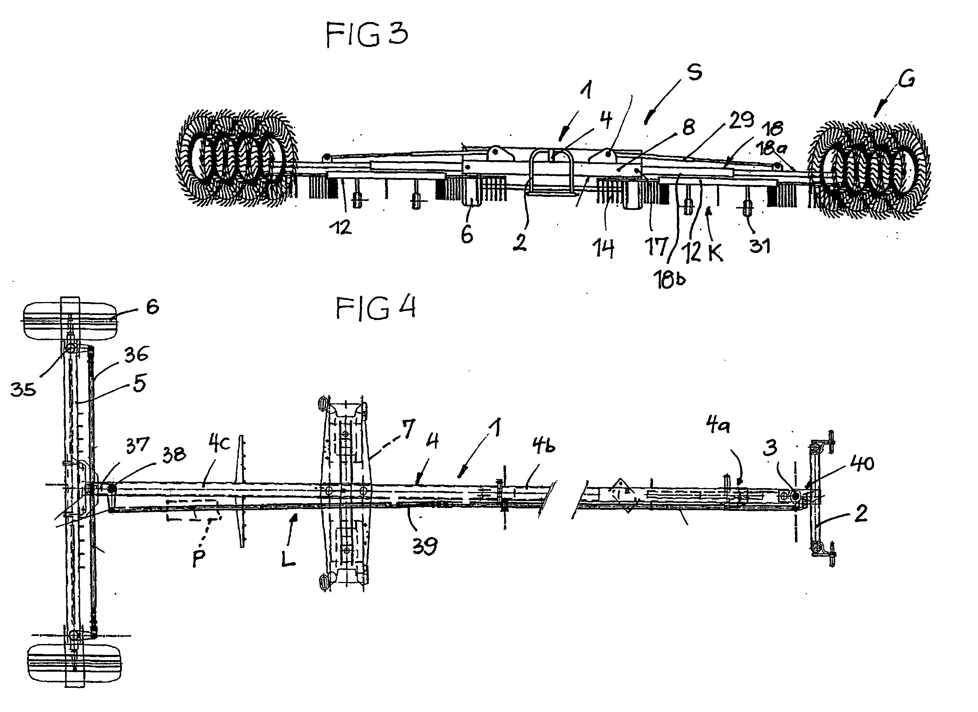

An den Stellachsen 17 der vorderen Quertraverse 8 sind quer abstehende Ausleger 18 angelenkt, an denen die Spinnenradgruppen G über eine gemeinsame Tragkonstruktion 19 um eine Schwenkachse 21 mit etwa vertikaler Ausrichtung schwenkverstellbar angelenkt sind. Die Ausleger 18 sind längenverstellbar (Doppelpfeil 16), beispielsweise mit Hilfe von Hydraulikzylindem 25, und sind zweckmäßigerweise teleskopierbar ausgebildet mit Teleskopabschnitten 18a, 18b (Fig. 3). An der Tragkonstruktion 19 sind bei der gezeigten Ausführungsform vier Spinnenräder 20 zueinander versetzt drehbar gelagert. Der Anstellwinkel um die Achse 21 ist mit einer Einstellvorrichtung 22 zu variieren. Gegebenenfalls ist eine fernverstellbare Einstellvorrichtung 24 (ein Hydraulikzylinder) vorgesehen.

Die Ausleger 18 (oder jede Tragkonstruktion 19) sind auf Bodentasträdem 23 abgestützt. Der Auflagedruck der Spinnenräder 20 wird mittels eines Gewichtsentlastungs-Federelements 27 zwischen dem Ausleger 18 und der Tragkonstruktion 19 eingestellt. Gegebenenfalls ist eine fernbetätigbare Einstellvorrichtung 28 für die Entlastungswirkung vorgesehen, um den Auflagedruck gegebenenfalls vom Schlepper aus während der Fahrt verändern zu können, wobei die Tragkonstruktion 19 um eine schrägliegende, in etwa bodenparallele Achse 26 am Ausleger 18 schwenken kann.

Die Gesamtarbeitsbreite AB₂, definiert durch die Spinnenradgruppen G kann 12,0 m oder mehr betragen. Die Längenverstellbarkeit der Ausleger 18 ermöglicht es jedoch, die Spinnenrädergruppen G auch weiter nach innen zu verlagern, falls erforderlich. Außerdem dient die Längenverstellbarkeit der Ausleger 18 dazu, in der Transportstellung der Spinnenradgruppen G (Fig. 5 und Fig. 7, in der die Spinnenradgruppen mit ihren Auslegern um mehr als 90° nach oben geschwenkt sind), diese so tief wie möglich einzustellen, um die zulässige maximale Transporthöhe TH (Fig. 7) einzuhalten. Mit in die Transportstellung geschwenkten Spinnenradgruppen G und Zinkenkreiseln K wird auch die maximal zulässige Transportbreite eingehalten.

Die Zinkenkreisel K laufen (Fig. 2) auf Bodenlaufrädem 31 unterhalb der Rotoren 12. Antriebsstränge 32 zu den Rotoren 12 sind in Fig. 2 strichpunktiert angedeutet. Ferner ist aus Fig. 2 zu entnehmen, dass die Spinnenräder 20 Radträger 33 mit strahlenförmig abstehenden, endseitig geknickten Zinken 34 aufweisen und in der Arbeitsstellung in etwa vertikal stehen, mit einer Ausrichtung um die vertikale Achse 21 in Richtung zu den Zinkenkreiseln K hin. Zum Verschwenken der Ausleger 18 bzw. 11 können Hydraulikzylinder 30 bzw. 29 zwischen die Ausleger 11, 18 und die Quertraversen 7, 8 eingesetzt sein.

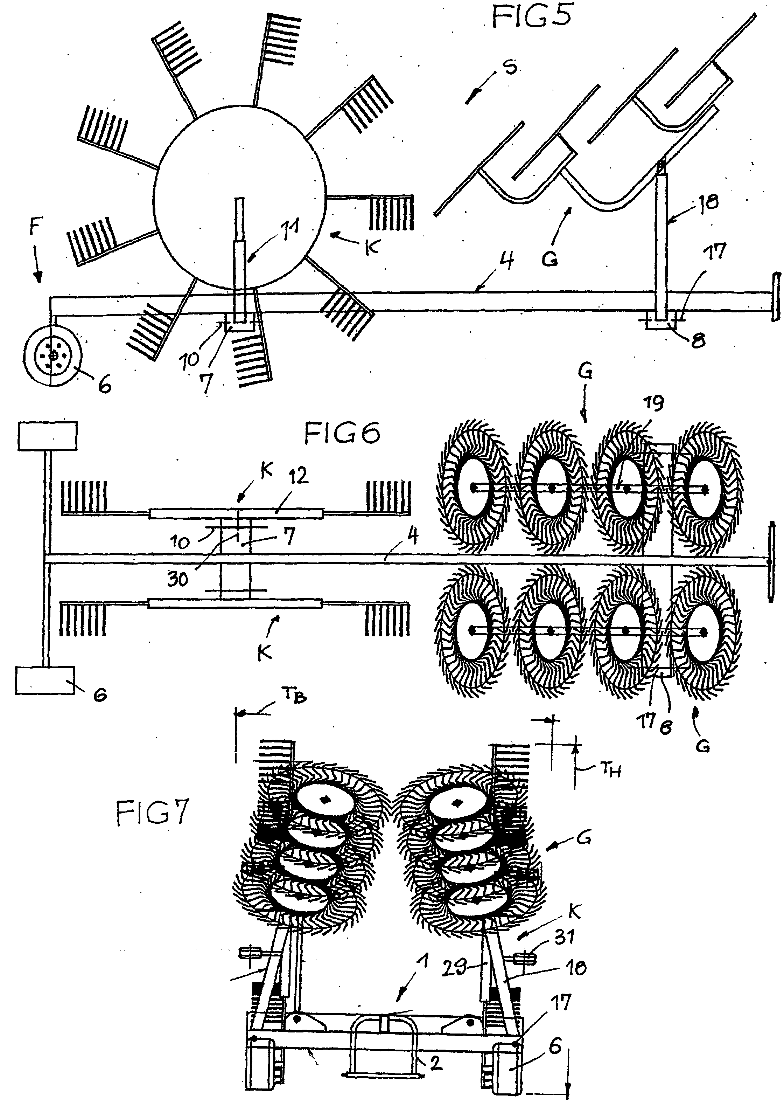

In der in den Fig. 5 bis 7 gezeigten Transportstellung sind die Zinkenkreisel K durch Verkürzen der Längen der Ausleger 11 so weit abgesenkt, dass sich ihre Zinken 14 bis nahe an den Boden erstrecken, während der Längsträger 4 auf dem Transportfahrwerk F abgestützt ist, und sind auch die Ausleger 18 so kurz eingestellt, dass die nach innen geschwenkten Spinnenradgruppen G innerhalb der Transporthöhe TH verbleiben.

In Fig. 4 ist schematisch die Zwangslenkung L für die Transporträder 6 als eine mögliche Ausstattungsvariante gezeigt. Anstelle einer Zwangslenkung könnte auch eine Servolenkung hydraulischer Art verwendet werden.

Gemäß Fig. 4 ist der Längsträger 4 relativ zum Tragrahmen 2 im Gelenk 3 um eine im Wesentlichen vertikale Gelenkachse schwenkbar. Die Transportlaufräder 5 sitzen auf Achsschenkeln, die im Portal 5 um in etwa vertikale Lenkachsen 35 schwenkbar und über Spurstangen 36 miteinander gekoppelt sind. An die Spurstangen 36 ist ein Lenkhebel 37 angeschlossen, der bei 38 an der hinteren Sektion 4c des Längsträgers 4 schwenkbar gelagert ist. Der Lenkhebel 37 ist L-förmig. An sein anderes Ende ist ein Lenkgestänge 39 angeschlossen, das sich entlang des Längsträgers 4 bis zu einer Schwenkwinkel-Abtastvorrichtung 40 erstreckt, mit der der relative Schwenkwinkel zwischen dem Tragrahmen 2 und dem Längsträger 4 im Gelenk 3 abgegriffen und in Lenkbewegungen der Transportlaufräder 6 umgewandelt wird (Zwangslenkung L). Im oder beim Lenkgestänge 39 könnte ein Stellglied P zum überlagernden aktiven Lenken der Transporträder 6 angeordnet sein, z.B. ein vom Schlepper aus betätigbarer Hydraulikzylinder. Trotz der Länge des Schwadgeräts S lassen sich damit schwierige Manövriersituationen meistern.

Zweckmäßigerweise sind in dem Schwadgerät die hintere Sektion 4c des Längsträgers 4 mit dem Transportfahrwerk F und den Zinkenkreiseln K wie auch die vordere Sektion 4a mit dem Tragrahmen 2 übliche Komponenten eines marktüblichen Mittelschwaders M, dessen Längsträger abgetrennt und durch die dazwischengesetzte Distanzhaltesektion 4b verlängert ist. Die Quertraverse 8, die als stabiler Dreiecksver bund ausgebildet sein kann, ist in die vordere Sektion 4a eingegliedert, so dass im Wesentlichen alle wichtigen Komponenten des marktüblichen Mittelschwaders auch für das Schwadgerät S der Fig. 1 bis 7 verwendbar sind.

## Patentansprüche

1. Schwadgerät (S), in Form einer Kombination aus einem Doppelkreiselschwader, der in einem an das Schlepperheck anbaubaren Traggestell (1) zwei vom Schlepper getriebene Zinkenkreisel (K) mit annähernd vertikalen Kreiselachsen und Laufrädern aufweist, und aus zwei am Traggestell (1) seitlich außen an Auslegern (18) in Arbeitsfahrtrichtung vor den Zinkenkreiseln (K) platzierten, bodenangetriebenen Spinnenradgruppen (G) zur Vergrößerung der Arbeitsbreite (AB₂), wobei zumindest die Spinnenradgruppen (G) am Traggestell (1) in eine Transportstellung hochschwenkbar sind und am Traggestell (1) ein Transportfahrwerk (F, F') vorgesehen ist, **dadurch gekennzeichnet, dass** der Doppelkreiselschwader ein Mittelschwader (M) mit einer Arbeitsbreite (AB₁) größer 4,0 m und Zinkenkreiseln (K) mit zwangsgesteuerten Zinken (12 - 15) ist, dass die Zinkenkreisel (K) am Traggestell (1) in eine Transportstellung hochschwenkbar angeordnet sind, und dass zumindest die Transporthöhe (T_{H}) der Spinnenradgruppen (G) in deren Transportstellung verringerbar ist.

2. Schwadgerät nach Anspruch 1, **dadurch gekennzeichnet, dass** die Zinkenkreisel (K) und die Spinnenradgruppen (G) jeweils an einem längenverstellbaren Ausleger (11, 18) angeordnet sind, und dass jeder Ausleger (11, 18) um eine im Wesentlichen zur Längsachse des Traggestells (1) parallele Stellachse (10, 17) am Traggestell (1) schwenkbar ist.

3. Schwadgerät nach Anspruch 1, **dadurch gekennzeichnet, dass** das Traggestell (1) einen auf dem Transportfahrwerk (F, F') abstützbaren Hauptrahmen mit der Form eines Längsträgers (4) mit einer ersten, vorderen und einer zweiten, hinteren Quertraverse (7, 8) jeweils für die Stellachsen (10, 17) aufweist.

4. Schwadgerät nach Anspruch 3, **dadurch gekennzeichnet, dass** der Längsträger (4) aus mehreren Sektionen (4a, 4b, 4c) zusammengesetzt ist, nämlich einer vorderen Sektion (4a) mit der, vorzugsweise als Dreiecksverband ausgebildeten, ersten Quertraverse (8), einer mittleren Distanzhaltersektion (4b), an der ggfs. Stützstreben (9) der ersten Quertraverse (8) angeschlossen sind, und einer hinteren Sektion (4c) mit der zweiten Quertraverse (7).

5. Schwadgerät nach Anspruch 1, **dadurch gekennzeichnet, dass** das Transportfahrwerk (F) am Hinterende des Traggestells (1) angeordnet ist, vorzugsweise am Hinterende der hinteren Längsträgersektion (4c).

6. Schwadgerät nach Anspruch 1, **dadurch gekennzeichnet, dass** das Transportfahrwerk (F') zwischen dem Mittelschwader (M) und den Spinnenradgruppen (G) angeordnet ist.

7. Schwadgerät nach Anspruch 1, **dadurch gekennzeichnet, dass** das Transportfahrwerk (F) lenkbare Transporträder (6) aufweist.

8. Schwadgerät nach Anspruch 7, **dadurch gekennzeichnet, dass** das Traggestell (1) in einem Gelenk (3) mit etwa vertikaler Gelenkachse gegenüber einem am Schlepper anschließbaren Tragrahmen (2) schwenkbar ist, und dass die lenkbaren Transporträder (6) über ein Lenkgestänge (35 - 39) einer Zwangslenkung (L) mit einer Schwenkwinkel-Abtastung (40) im Bereich des Gelenks (3) gekoppelt sind.

9. Schwadgerät nach Anspruch 8, **dadurch gekennzeichnet, dass** in der Zwangslenkung (L) wenigstens ein Stellglied (P) zu einer überlagernden aktiven Lenkung der Transporträder (6) vorgesehen ist, vorzugsweise ein fernbetätigbarer Hydraulikzylinder im oder an dem Lenkgestänge (35 - 39).

10. Schwadgerät nach Anspruch 1, **dadurch gekennzeichnet, dass** die Ausleger (18) der Spinnenradgruppen (G) auf Boden-Tasträdem (28) abgestützt sind.

11. Schwadgerät nach Anspruch 2, **dadurch gekennzeichnet, dass** die Ausleger (11 und/oder 18) teleskopierbar und mit fernverstellbaren Hydraulikzylindern (25) ausgebildet sind.

12. Schwadgerät nach Anspruch 1, **dadurch gekennzeichnet, dass** jede Spinnenradgruppe (G) an einer Tragkonstruktion (19) zwei bis sechs, vorzugsweise vier, gegeneinander versetzte Spinnenräder (20) aufweist, dass die Tragkonstruktion (19) am Ausleger (18) um eine etwa vertikale Achse (21) schwenkbar angelenkt ist, und dass zwischen der Tragkonstruktion (19) und dem Ausleger (18) eine Schwenkwinkel-Verstellvorrichtung (22, 24) vorgesehen ist, vorzugsweise eine mechanische oder eine hydraulisch fernverstellbare Schwenkwinkel-Verstellvorrichtung.

13. Schwadgerät nach Anspruch 1, **dadurch gekennzeichnet, dass** zwischen dem Ausleger (18) und der Tragkonstruktion (19) wenigstens ein Gewichtsentlastungs-Federelement (27) angeordnet ist, vorzugsweise ein hydraulisch fernverstellbares Federelement (27, 28).

14. Schwadgerät nach Anspruch 2, **dadurch gekennzeichnet, dass** die Stellachsen (17) der Ausleger (18) der Spinnenradgruppen (G) mit maximal zulässiger Transportbreite (T13) beabstandet sind, vorzugsweise etwa 2,7 m, und dass der Abstand zwischen den Stellachsen (10) der Ausleger (11) der Zinkenkreisel (K) kleiner ist als die maximal zulässige Transportbreite (TB).

15. Schwadgerät nach Anspruch 4, **dadurch gekennzeichnet, dass** die vordere Sektion (4a) und die hintere Sektion (4b) des Längsträgers (4) durch die dazwischengesetzte Distanzhaltersektion (4b) getrennte Sektionen des Längsträgers eines marktüblichen Mittelschwaders (M) sind, und dass die Quertraverse (8) der Stellachsen (17) der Ausleger (18) der Spinnenradgruppen (G) in die vordere, abgetrennte Sektion des Längsträgers des marktüblichen Mittelschwaders eingebaut ist.

## Claims

1. Swathing device (S) in the form of a combination which is produced from a double rotary tedder on a supporting frame (1), which is attachable to the rear of the tractor, and which tedder includes two rotary heads (K) driven by the tractor with approximately vertical rotary axes and running wheels, and also from two ground-driven spider wheel groups (G), which are mounted on the supporting frame (1) laterally on the outside on booms (18) in front of the rotary heads (K) in the direction of travel, for enlarging the working width (AB₂), wherein at least the spider wheel groups (G) are vertically pivotable on the supporting frame (1) into a transport position and a transport framework (F, F') is provided on the supporting frame (1),
**characterised in that** the double rotary tedder is a central tedder (M) with a working width (AB₁) greater than 4.0 m and rotary heads (K) with positively controlled tines (12 -15), **in that** the rotary heads (K) are disposed on the supporting frame (1) so as to be vertically pivotable into a transport position, and **in that** at least the transport height (T_{H}) of the spider wheel groups (G) is reducible when said spider groups (G) are in the transport position.

2. Swathing device according to claim 1, **characterised in that** the rotary heads (K) and the spider wheel groups (G) are each disposed on a longitudinally adjustable boom (11, 18), and **in that** each boom (11, 18) is pivotable on the supporting frame (1) about an adjustment axis (10, 17) which is substantially parallel to the longitudinal axis of the supporting frame (1).

3. Swathing device according to claim 1, **characterised in that** the supporting frame (1) includes a main frame which is supportable on the transport framework (F, F') and has the form of a longitudinal carrier (4) with a first, front cross-arm and a second, rear cross-arm (7, 8) for each of the adjustment axes (10, 17).

4. Swathing device according to claim 3, **characterised in that** the longitudinal carrier (4) is assembled from a plurality of sections (4a, 4b, 4c), namely a front section (4a) with the first cross-arm (8), which is preferably in the form of a triangular connection, a middle spacer section (4b), to which, where necessary, supporting struts (9) of the first cross-arm (8) are connected, and a rear section (4c) with the second cross-arm (7).

5. Swathing device according to claim 1, **characterised in that** the transport framework (F) is disposed at the rear end of the supporting frame (1), preferably at the rear end of the rear longitudinal carrier section (4c).

6. Swathing device according to claim 1, **characterised in that** the transport framework (F') is disposed between the central tedder (M) and the spider wheel groups (G).

7. Swathing device according to claim 1, **characterised in that** the transport framework (F) includes steerable transport wheels (6).

8. Swathing device according to claim 7, **characterised in that** the supporting frame (1) is pivotable in a joint (3) with an approximately vertical joint axis relative to a support frame (2), which is connectable to the tractor, and **in that** the steerable transport wheels (6) are coupled to a pivotal angle scanning means (40) in the region of the joint (3) via a steering linkage (35 - 39) of a positive steering means (L).

9. Swathing device according to claim 8, **characterised in that** at least one adjusting member (P) is provided for a superposed active steering means of the transport wheels (6), preferably a remotely actuatable hydraulic cylinder in or on the steering linkage (35 - 39).

10. Swathing device according to claim 1, **characterised in that** the booms (18) of the spider wheel groups (G) are supported on ground contacting wheels (28).

11. Swathing device according to claim 2, **characterised in that** the booms (11 and/or 18) are telescopicable and have remotely adjustable hydraulic cylinders (25).

12. Swathing device according to claim 1, **characterised in that** on a supporting structure (19) each spider wheel group (G) has two to six, preferably four, spider wheels (20) displaced relative to each other, **in that** the supporting structure (19) is pivotally mounted on the boom (18) so as to be pivotable about an approximately vertical axis (21), and **in that** a pivotal angle adjusting apparatus (22, 24), preferably a mechanical or a hydraulically remotely adjustable pivotal angle adjusting apparatus, is provided between the supporting structure (19) and the boom (18).

13. Swathing device according to claim 1, **characterised in that** at least one weight reducing spring element (27) is disposed between the boom (18) and the supporting structure (19), preferably a hydraulically remotely adjustable spring element (27, 28).

14. Swathing device according to claim 2, **characterised in that** the adjustment axes (17) of the booms (18) of the spider wheel groups (G) are spaced apart at maximum admissible transport width (T13), preferably approximately 2.7 m, and **in that** the distance between the adjustment axes (10) of the booms (11 ) of the rotary heads (K) is smaller than the maximum admissible transport width (TB).

15. Swathing device according to claim 4, **characterised in that** the front section (4a) and the rear section (4c) of the longitudinal carrier (4), due to the spacing section (4b) placed in between them, are separate sections of the longitudinal carrier of a commercially available central tedder (M), and **in that** the cross-arm (8) of the adjustment axes (17) of the booms (18) of the spider wheel groups (G) is incorporated into the front, separate section of the longitudinal carrier of the commercially available central tedder.

## Revendications

1. Dispositif d'andainage (S), sous la forme d'une combinaison d'une andaineuse à roue double, qui présente dans un bâti de support (1) pouvant être monté sur l'arrière du tracteur deux roues à dents (K) entraînées par le tracteur avec des axes de roue et roues de roulement approximativement verticales, et de deux groupes de roues spider (G) entraînées au sol, placées au bâti de support (1) latéralement à l'extérieur à des bras (18) dans la direction d'avancement pour le travail en amont des roues à dents (K) pour l'agrandissement de la largeur de travail (AB₂), où au moins les groupes de roues spider (G) peuvent être remontés par pivotement au bâti de support (1) dans une position de transport et qu'il est prévu au bâti de support (1) un mécanisme de roulement de transport (F, F'), **caractérisé en ce que** l'andaineuse à roue double est une andaineuse médiane (M) d'une largeur de travail (AB₁) plus grande que 4,0 m et avec des roues à dents (K) avec des dents (12-15) à commande forcée, **en ce que** les roues à dents (K) sont disposées au bâti de support (1) de façon à pouvoir être remontées par pivotement dans une position de transport, et **en ce qu'**au moins la hauteur de transport (T_{H}) des groupes de roues spider (G) dans leur position de transport peut être diminuée.

2. Dispositif d'andainage selon la revendication 1, **caractérisé en ce que** les roues à dents (K) et les groupes de roues spider (G) sont disposés à chaque fois à un bras (11, 18) ajustable en longueur, et **en ce que** chaque bras (11, 18) peut être amené à pivoter au bâti de support (1) autour d'un axe de positionnement (10, 17) sensiblement parallèle à l'axe longitudinal du bâti de support (1).

3. Dispositif d'andainage selon la revendication 1, **caractérisé en ce que** le bâti de support (1) présente un châssis principal pouvant s'appuyer sur le mécanisme de roulement de transport (F, F') de la forme d'un support longitudinal (4) avec une première traverse avant et une seconde traverse arrière (7, 8) à chaque fois pour les axes de positionnement (10, 17).

4. Dispositif d'andainage selon la revendication 3, **caractérisé en ce que** le support longitudinal (4) est constitué de plusieurs sections (4a, 4b, 4c), à savoir d'une section avant (4a) avec la première traverse (8) réalisée de préférence comme patte d'oie, d'une section de maintien d'écart médiane (4b) à laquelle sont reliés le cas échéant des montants de support (9) de la première traverse (8) et d'une section arrière (4c) avec la deuxième traverse (7).

5. Dispositif d'andainage selon la revendication 1, **caractérisé en ce que** le mécanisme de roulement de transport (F) est disposé à l'extrémité arrière du bâti de support (1), de préférence à l'extrémité arrière de la section arrière (4c) du support longitudinal.

6. Dispositif d'andainage selon la revendication 1, **caractérisé en ce que** le mécanisme de roulement de transport (F') est disposé entre l'andaineuse médiane (M) et les groupes de roues spider (G).

7. Dispositif d'andainage selon la revendication 1, **caractérisé en ce que** le mécanisme de roulement de transport (F) comporte des roues de transport (6) aptes à être dirigées.

8. Dispositif d'andainage selon la revendication 7, **caractérisé en ce que** le bâti de support (1) peut pivoter dans une articulation (3) avec un axe d'articulation à peu près vertical par rapport à un châssis de support (2) pouvant être accouplé au tracteur, et **en ce que** les roues de transport dirigeables (6) sont couplées par une timonerie (35-39) d'une direction à accouplement rigide (L) à un balayage de l'angle de pivotement (40) dans la zone de l'articulation (3).

9. Dispositif d'andainage selon la revendication 8, **caractérisé en ce qu'**il est prévu dans la direction à accouplement rigide (L) au moins un organe de positionnement (P) en vue d'une direction active superposée des roues de transport (6), de préférence un vérin hydraulique commandé à distance dans ou à la timonerie (35-39).

10. Dispositif d'andainage selon la revendication 1, **caractérisé en ce que** les bras (18) des groupes de roues spider (G) s'appuient sur des roues de tâtage de sol (28).

11. Dispositif d'andainage selon la revendication 2, **caractérisé en ce que** les bras (11 et/ou 18) sont réalisés de manière télescopique et avec des vérins hydrauliques (25) ajustables à distance.

12. Dispositif d'andainage selon la revendication 1, **caractérisé en ce que** chaque groupe de roues spider (G) présente à une construction de support (19) deux à six, de préférence quatre roues spider (20) décalées les unes par rapport aux autres, **en ce que** la construction de support (19) est articulée au bras (18) d'une manière pivotante autour d'un axe (21) à peu près vertical, et **en ce qu'**il est prévu entre la construction de support (19) et le bras (18) un dispositif de modification (22, 24) de l'angle de pivotement, de préférence un dispositif de modification de l'angle de pivotement mécanique ou ajustable hydrauliquement à distance.

13. Dispositif d'andainage selon la revendication 1, **caractérisé en ce qu'**il est disposé entre le bras (18) et la construction de support (19) au moins un élément de ressort de décharge de poids (27), de préférence un élément de ressort (27, 28) ajustable hydrauliquement à distance.

14. Dispositif d'andainage selon la revendication 2, **caractérisé en ce que** les axes de positionnement (17) des bras (18) des groupes de roues spider (G) sont espacés d'une largeur de transport maximale autorisée (T13), de préférence sur environ 2,7 m, et que l'écart entre les axes de positionnement (10) des bras (11) des roues à dents (K) est plus petit que la largeur de transport maximale autorisée (TB).

15. Dispositif d'andainage selon la revendication 4, **caractérisé en ce que** la section avant (4a) et la section arrière (4b) du support longitudinal (4), en raison de la section de maintien d'écart (4b) intercalée, sont des sections séparées du support longitudinal d'une andaineuse médiane (M) usuelle dans le commerce, et **en ce que** la traverse (8) des axes de positionnement (17) des bras (18) des groupes de roues spider (G) est montée dans la section avant séparée du support longitudinal de l'andaineuse médiane usuelle dans le commerce.
